# FASCICULE DE BREVET EUROPEEN

(11) **EP 4 052 890 B1**
(45) Date de publication et mention de la délivrance du brevet: **23.08.2023**
(21) Numéro de dépôt: 22154468.7
(22) Date de dépôt: 01.02.2022
(51) Int. Cl.: B29C 70/32, B29C 70/08

(54) **PROCÉDÉ DE FABRICATION D'UN RÉSERVOIR COMPOSITE DE FLUIDE SOUS PRESSION ET RÉSERVOIR**
VERFAHREN ZUR HERSTELLUNG EINES VERBUNDBEHÄLTERS FÜR FLUIDE UNTER DRUCK UND BEHÄLTER
METHOD OF MANUFACTURING A COMPOSITE TANK OF PRESSURISED FLUID AND TANK

(30) Priorité: 02.03.2021 FR 2102010
(43) Date de publication de la demande: 07.09.2022
(73) Titulaire: L'Air Liquide, société anonyme pour l'Étude et l'Exploitation des procédés Georges Claude, 75007 Paris (FR)
(72) Inventeur: PAPIN, Philippe, 78350 LES LOGES-EN-JOSAS (FR)
(74) Mandataire: Air Liquide

(56) Documents cités:
- DE-A1- 19 601 761
- US-A1- 2005 258 575

## Description

L'invention concerne un procédé de fabrication d'un réservoir composite de fluide sous pression et un réservoir ainsi obtenu. L'invention concerne plus particulièrement un procédé de fabrication d'un réservoir composite de fluide sous pression comprenant une première étape de bobinage, sur une enveloppe, d'une première bande à base de résine thermoplastique et comprenant une première proportion déterminée de fibres de renforcement, une seconde étape de bobinage, sur la première bande, d'une seconde bande à base de résine thermoplastique et comprenant une seconde proportion déterminée de fibres de renforcement, la seconde bande formant la surface externe dudit réservoir, dans lequel la seconde proportion déterminée de fibres est inférieure à la première proportion déterminée de fibres.

Les bouteilles ou réservoirs composites doivent généralement avoir une protection sur leur surface extérieure pour éviter les chocs et/ou pour résister aux conditions environnementales. Généralement, une fine couche d'époxy / fibre de verre est enroulée sur la surface extérieure des réservoirs composites thermo-durcis, pour résister aux agressions.

Les réservoirs en matériau thermodurcissable utilisés pour stocker les gaz ont dans la plupart des cas la même teneur en fibre de carbone dans toute la structure de renfort. Ensuite, pendant la production, le processus de bobinage s'arrête et recommence avec un bobinage en fibre de verre pour la protection du cylindre. Cela est long et coûteux.

Une technologie peut être utilisée pour l'enroulement de la dernière couche externe avec une résine thermoplastique (cf. EP1526214A1). Ensuite, une couche externe avec une teneur en résine plus élevée est enroulée. Le document US 2005/258575 A1 divulgue les caractéristiques du préambule de la revendication 1.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que la seconde bande bobinée lors de la seconde étape de bobinage est solidaire d'une couche de feutrine imprégnée de résine du même type que la résine de la première bande et de la seconde bande.

Ceci permet d'ajouter une plus grande quantité de résine thermoplastique sur la surface externe par rapport aux techniques existantes.

Par ailleurs, des modes de réalisation de l'invention peuvent comporter l'une ou plusieurs des caractéristiques suivantes :
- la première proportion déterminée de fibres de renforcement est comprise entre 40 et 80% en volume,
- la seconde proportion déterminée de fibres de renforcement est comprise entre 20 et 40% en volume,
- la seconde bande bobinée lors de la seconde étape de bobinage est solidaire d'une couche de feutrine imprégnée de résine du même type que la résine de la première bande et de la seconde bande, ladite feutrine ayant une masse surfacique comprise entre 100 et 450g/m²
- la couche de feutrine imprégnée de résine est rendue solidaire sur la seconde bande par chauffage et compression avant la seconde étape de bobinage,
- la première bande et la seconde bande sont des entités distinctes enroulées de façon distincte avant les étapes de bobinage,
- la première bande et la seconde bande sont solidaires bout à bout et/ou par chevauchement partiel de façon à former une seule bande continue enroulée en une seule entité avant les étapes de bobinage,
- les première bande et seconde bande sont rendues solidaires via l'un au moins parmi : un chauffage, un rayonnement Infra-Rouge, une compression,
- après la seconde étape de bobinage, le procédé comprend une étape d'adhésion des deux bandes enroulées l'une sur l'autre via l'un au moins parmi : un chauffage, un rayonnement Infra-Rouge, une compression,
- les première et seconde étapes de bobinage sont réalisées sur une enveloppe étanche composé de l'un au moins parmi : polymère, métal.

L'invention concerne également un réservoir composite obtenu par le procédé selon l'une quelconque des caractéristiques précédentes ou ci-dessous, dans lequel sa paroi comprend une épaisseur constituée par le bobinage de la première bande comprise entre 0,5 mm et 85mm, une épaisseur constituée par le bobinage de la seconde bande comprise entre 0,1 et 20mm.

D'autres particularités et avantages apparaîtront à la lecture de la description ci-après, faite en référence aux figures dans lesquelles :
[Fig. 1] représente une vue schématique et partielle, illustrant un exemple d'étapes du procédé de fabrication selon l'invention.
[Fig. 2] représente une vue en coupe, schématique et partielle, illustrant un exemple de structure d'un réservoir selon l'invention,
[Fig. 3] représente une vue en coupe, schématique et partielle, illustrant un premier exemple de réalisation de bande(s) de bobinage pouvant être utilisée(s) dans le procédé,
[Fig. 4] représente une vue en coupe, schématique et partielle, illustrant un deuxième exemple de réalisation de bande(s) de bobinage pouvant être utilisée(s) dans le procédé,
[Fig. 5] représente une vue en coupe, schématique et partielle, illustrant un troisième exemple de réalisation de bande(s) de bobinage pouvant être utilisée(s) dans le procédé,
[Fig. 6] représente une vue en coupe, schématique et partielle, illustrant un quatrième exemple de réalisation de bande(s) de bobinage pouvant être utilisée(s) dans le procédé.

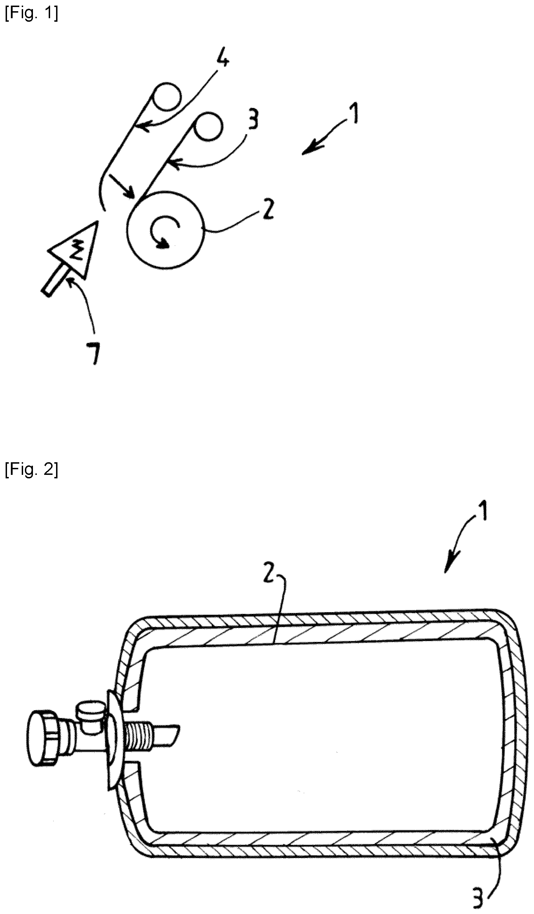

Comme schématisé à la [Fig. 2] et à la [Fig. 1], le procédé de fabrication d'un réservoir 1 composite de fluide sous pression comprend une première étape de bobinage, sur une enveloppe 2, d'une première bande 3 à base de résine thermoplastique et comprenant une première proportion déterminée de fibres de renforcement.

Le procédé comprend une seconde étape de bobinage, sur la première bande 3, d'une seconde bande 4 à base de résine thermoplastique et comprenant une seconde proportion déterminée de fibres de renforcement.

La seconde bande 4 est prévue pour former la surface externe dudit réservoir 1, c'est-à-dire que, après fabrication, la seconde bande forme la surface externe périphérique du réservoir 1.

La seconde proportion déterminée de fibres est inférieure à la première proportion déterminée de fibres.

De préférence après la seconde étape de bobinage, le procédé peut comprendre une étape d'adhésion des deux bandes 3, 4 enroulées l'une sur l'autre via l'un au moins parmi : un chauffage 7, un rayonnement Infra-Rouge, une compression. Les températures de fusion des résines peuvent être comprises entre 120°C et 350°C.

Les première et seconde étapes de bobinage peuvent être réalisées sur une enveloppe 2 étanche (« liner ») composé de l'un au moins parmi : polymère, métal. Alternativement, cette enveloppe 2 étanche pourrait être formée par de première bandes bobinée (notamment lors ou avant la première étape de bobinage).

Selon une particularité avantageuse, la seconde bande 4 bobinée lors de la seconde étape de bobinage est
- solidaire d'une couche 5 de feutrine imprégnée de résine du même type que la résine de la première bande et de la seconde bande 4 et/ou
- est encapsulée dans de la résine du même type que la résine de la première bande et de la seconde bande 4.

Ainsi, dans le premier cas précité le procédé prévoit d'enrouler sur la structure de cylindre externe un ruban (bande 3) à haute teneur en résine associée à feutrine 5 déjà imprégné de la même résine dont la bande 3 est composée. La feutrine a par exemple une masse surfacique comprise entre 100 et 450g/m². La feutrine peut comporter ou être constituée d'un tissu non tissé en polyester, polyamide, une combinaison de polyester et polyamide ou tout autre matériau(x) approprié(s).

Selon les besoins (probabilité d'impact ou d'endommagement par des conditions environnementales difficiles), l'épaisseur (poids par surface) de la feutrine non-tissée imprégnée et/ou de la résine peuvent être choisie/adaptée en conséquence.

Par exemple, la première proportion déterminée de fibres de renforcement est comprise entre 40 et 80% en volume. La seconde proportion déterminée de fibres de renforcement est comprise par exemple entre 20 et 40% en volume.

Une épaisseur typique de bande peut être du type à masse par unité de surface comprise entre 40 et 350 g/m².

Par exemple, la couche 5 de feutrine imprégnée de résine est rendue solidaire sur la seconde bande 4 par chauffage et compression avant la seconde étape de bobinage.

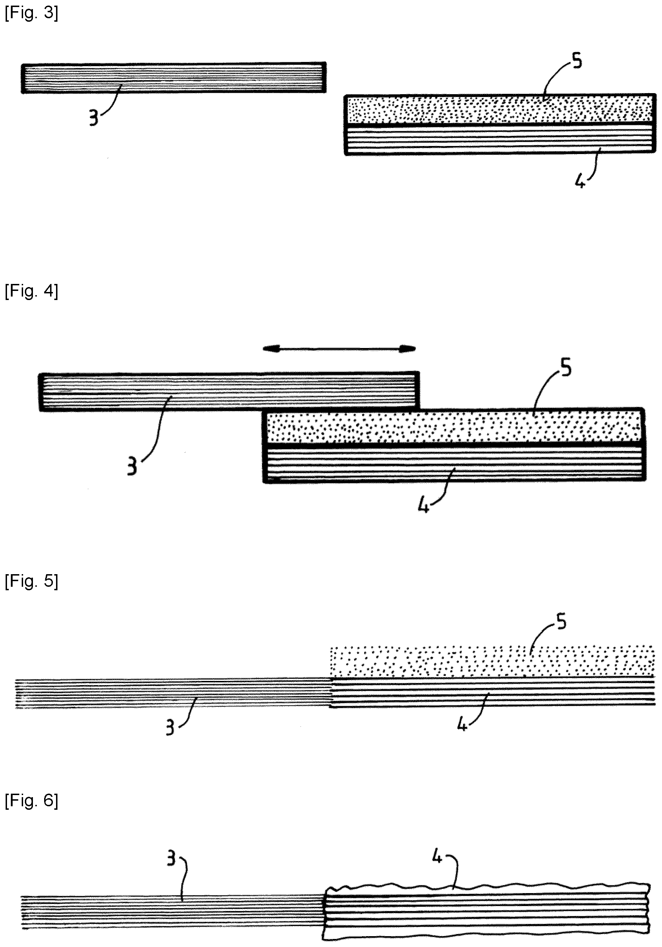

Comme schématisé aux [Fig. 1] et [Fig. 3], la première bande 3 et la seconde bande 4 peuvent être des entités distinctes (bobines) enroulées de façon séparée (distinctes) avant les étapes de bobinage.

Dans d'autres variantes possibles les deux bandes 3, 4 sont pré-associées en série au sein d'une même entité (même enroulement par exemple), la première bande 3 et la seconde bande 4 peuvent être solidaires bout à bout (cf. [Fig. 5] ou [Fig. 6]) et/ou par chevauchement partiel (cf. [Fig. 5]) de façon à former une seule bande continue enroulée en une seule entité avant les étapes de bobinage.

Cette dernière variante permet de gagner du temps de bobinage (améliore la rentabilité) en diminuant le nombre de bobine (s) de la longueur nécessaire pour bobiner le réservoir.

Les première bande 3 et seconde bande 4 peuvent être rendues solidaires via l'un au moins parmi : un chauffage, un rayonnement Infra-Rouge, une compression ou tout autre technique appropriée. Le réservoir 1composite ainsi obtenu peut posséder une paroi comprenant une épaisseur constituée par le bobinage de la première bande 3 comprise entre 0,5 mm et 85mm et une épaisseur constituée par le bobinage de la seconde bande 4 comprise entre 0,1 et 20mm.

La feutrine 5 est de préférence imprégnée de la même résine que la résine dont la bande 4 est réalisé (ou d'une autre résine si nécessaire en fonction des conditions environnementales).

Par exemple, la feutrine 5 est matelassée avec du ruban adhésif sur la bande 4 (mis en adhésion). Par exemple, pour rendre cette couche extérieure riche en résine sur la surface extérieure du cylindre, les bandes renforcées et la feutrine peuvent être matelassées (assemblées) avant l'enroulement.

L'imprégnation de la feutrine 5 peut être réalisée par tout procédé approprié. La quantité de résine utilisée pour imprégner les fibres de renforcement peut être modifiée en fonction des besoins.

Dans l'alternative de la [Fig. 6], la seconde bande 4 bobinée lors de la seconde étape de bobinage est encapsulée dans de la résine du même type que la résine de la première bande et de la seconde bande 4.

La ou les bandes peuvent être à base de résine polyoléfine PET, PBT, PA, polymère, copolymère contenant des fibres de renforcement telles que des fibres de verre et/ou de carbone.

## Revendications

1. Procédé de fabrication d'un réservoir (1) composite de fluide sous pression comprenant une première étape de bobinage, sur une enveloppe (2), d'une première bande (3) à base de résine thermoplastique et comprenant une première proportion déterminée de fibres de renforcement, une seconde étape de bobinage, sur la première bande (3), d'une seconde bande (4) à base de résine thermoplastique et comprenant une seconde proportion déterminée de fibres de renforcement, la seconde bande (4) formant la surface externe dudit réservoir (1), dans lequel la seconde proportion déterminée de fibres est inférieure à la première proportion déterminée de fibres, **caractérisé en ce que** la seconde bande (4) bobinée lors de la seconde étape de bobinage est solidaire d'une couche (5) de feutrine imprégnée de résine du même type que la résine de la première bande et de la seconde bande (4) .

2. Procédé selon la revendication 1 **caractérisé en ce que** la seconde bande (4) bobinée lors de la seconde étape de bobinage est encapsulée dans de la résine du même type que la résine de la première bande et de la seconde bande (4).

3. Procédé selon la revendication 1 ou 2, **caractérisé en ce que** la première proportion déterminée de fibres de renforcement est comprise entre 40 et 80% en volume.

4. Procédé selon l'une quelconque des revendications 1 à 3, **caractérisé en ce que** la seconde proportion déterminée de fibres de renforcement est comprise entre 20 et 40% en volume.

5. Procédé selon l'une quelconque des revendications 1 à 4, **caractérisé en ce que** la seconde bande (4) bobinée lors de la seconde étape de bobinage est solidaire d'une couche (5) de feutrine imprégnée de résine du même type que la résine de la première bande et de la seconde bande (4), ladite feutrine ayant une masse surfacique comprise entre 100 et 450g/m².

6. Procédé selon la revendication 5, **caractérisé en ce que** la couche (5) de feutrine imprégnée de résine est rendue solidaire sur la seconde bande (4) par chauffage et compression avant la seconde étape de bobinage.

7. Procédé selon l'une quelconque des revendications 1 à 6, **caractérisé en ce que** la première bande (3) et la seconde bande (4) sont des entités distinctes enroulées de façon distincte avant les étapes de bobinage.

8. Procédé selon l'une quelconque des revendications 1 à 6, **caractérisé en ce que** la première bande (3) et la seconde bande (4) sont solidaires bout à bout et/ou par chevauchement partiel de façon à former une seule bande continue enroulée en une seule entité avant les étapes de bobinage.

9. Procédé selon la revendication 8, **caractérisé en ce que** les première bande (3) et seconde bande (4) sont rendues solidaires via l'un au moins parmi : un chauffage, un rayonnement Infra-Rouge, une compression.

10. Procédé selon l'une quelconque des revendications 1 à 9, **caractérisé en ce que**, après la seconde étape de bobinage, le procédé comprend une étape d'adhésion des deux bandes (3, 4) enroulées l'une sur l'autre via l'un au moins parmi : un chauffage, un rayonnement Infra-Rouge, une compression.

11. Procédé selon l'une quelconque des revendications 1 à 10, **caractérisé en ce que** les première et seconde étapes de bobinage sont réalisées sur une enveloppe (2) étanche composé de l'un au moins parmi : polymère, métal.

12. Réservoir composite obtenu par le procédé selon l'une quelconque des revendications précédentes, **caractérisé en ce que** sa paroi comprend une épaisseur constituée par le bobinage de la première bande (3) comprise entre 0,5 mm et 85mm, une épaisseur constituée par le bobinage de la seconde bande (4) comprise entre 0,1 et 20mm.

## Patentansprüche

1. Verfahren zur Herstellung eines Verbundbehälters (1) für ein Druckfluid, umfassend einen ersten Schritt des Aufwickelns eines ersten Bands (3) auf der Basis von thermoplastischem Harz, das einen ersten vorbestimmten Anteil an Verstärkungsfasern umfasst, auf einen Mantel (2), einen zweiten Schritt des Aufwickelns eines zweiten Bands (4) auf der Basis von thermoplastischem Harz, das einen zweiten vorbestimmten Anteil von Verstärkungsfasern umfasst, auf das erste Band (3), wobei das zweite Band (4) die Außenfläche des Behälters (1) bildet, wobei der zweite vorbestimmte Anteil an Fasern geringer als der erste vorbestimmte Anteil an Fasern ist, **dadurch gekennzeichnet, dass** das im zweiten Aufwickelschritt aufgewickelte zweite Band (4) fest mit einer Schicht (5) aus Filz verbunden ist, die mit Harz desselben Typs wie das Harz des ersten Bands und des zweiten Bands (4) imprägniert ist.

2. Verfahren nach Anspruch 1, **dadurch gekennzeichnet, dass** das im zweiten Aufwickelschritt aufgewickelte zweite Band (4) in Harz desselben Typs wie das Harz des ersten Bands und des zweiten Bands (4) eingekapselt ist.

3. Verfahren nach Anspruch 1 oder 2, **dadurch gekennzeichnet, dass** der erste vorbestimmte Anteil an Verstärkungsfasern zwischen 40 und 80 Volumenprozent beträgt.

4. Verfahren nach einem der Ansprüche 1 bis 3, **dadurch gekennzeichnet, dass** der zweite vorbestimmte Anteil an Verstärkungsfasern zwischen 20 und 40 Volumenprozent beträgt.

5. Verfahren nach einem der Ansprüche 1 bis 4, **dadurch gekennzeichnet, dass** das im zweiten Aufwickelschritt aufgewickelte zweite Band (4) fest mit einer Schicht (5) aus Filz verbunden ist, das mit Harz desselben Typs wie das Harz des ersten Bands und des zweiten Bands (4) imprägniert ist, wobei der Filz eine flächenbezogene Masse zwischen 100 und 450 g/m² aufweist.

6. Verfahren nach Anspruch 5, **dadurch gekennzeichnet, dass** die harzimprägnierte Filzschicht (5) vor dem zweiten Aufwickelschritt durch Erhitzen und Komprimieren fest mit dem zweiten Band (4) verbunden wird.

7. Verfahren nach einem der Ansprüche 1 bis 6, **dadurch gekennzeichnet, dass** das erste Band (3) und das zweite Band (4) separate Einheiten sind, die vor den Aufwickelschritten separat aufgewickelt werden.

8. Verfahren nach einem der Ansprüche 1 bis 6, **dadurch gekennzeichnet, dass** das erste Band (3) und das zweite Band (4) Ende an Ende und/oder teilweise überlappend fest miteinander verbunden sind, sodass sie ein einziges kontinuierliches Band bilden, das vor den Aufwickelschritten zu einer Einheit aufgewickelt wird.

9. Verfahren nach Anspruch 8, **dadurch gekennzeichnet, dass** das erste Band (3) und das zweite Band (4) durch Erhitzen, Infrarotstrahlung oder Komprimieren fest miteinander verbunden werden.

10. Verfahren nach einem der Ansprüche 1 bis 9, **dadurch gekennzeichnet, dass** nach dem zweiten Schritt des Aufwickelns das Verfahren einen Schritt des Verklebens der beiden aufeinandergewickelten Bänder (3, 4) durch Erhitzen, Infrarotstrahlung oder Komprimieren umfasst.

11. Verfahren nach einem der Ansprüche 1 bis 10, **dadurch gekennzeichnet, dass** der erste und der zweite Schritt des Aufwickelns auf einem dichten Mantel (2) ausgeführt werden, der aus mindestens einem der folgenden Materialien zusammengesetzt ist: Polymer, Metall.

12. Verbundbehälter, der durch ein Verfahren nach einem der vorangehenden Ansprüche erhalten wird, **dadurch gekennzeichnet, dass** seine Wand eine durch die Wicklung des ersten Bands (3) gebildete Dicke zwischen 0,5 mm und 85 mm und eine durch die Wicklung des zweiten Bands (4) gebildete Dicke zwischen 0,1 und 20 mm umfasst.

## Claims

1. Method for manufacturing a composite pressurized-fluid vessel (1), comprising a first step of winding a first thermoplastic resin-based tape (3), which comprises a first determined proportion of reinforcing fibres, onto a liner (2), a second step of winding a second thermoplastic resin-based tape (4), which comprises a second determined proportion of reinforcing fibres, onto the first tape (3), the second tape (4) forming the outer surface of said vessel (1), wherein the second determined proportion of fibres is lower than the first determined proportion of fibres, **characterized in that** the second tape (4), which is wound in the second winding step, is secured to a layer (5) of fleece impregnated with the same type of resin as the resin of the first tape and of the second tape (4).

2. Method according to Claim 1, **characterized in that** the second tape (4), which is wound in the second winding step, is encapsulated in the same type of resin as the resin of the first tape and of the second tape (4).

3. Method according to Claim 1 or 2, **characterized in that** the first determined proportion of reinforcing fibres is between 40 and 80% by volume.

4. Method according to any one of Claims 1 to 3, **characterized in that** the second determined proportion of reinforcing fibres is between 20 and 40% by volume.

5. Method according to any one of Claims 1 to 4, **characterized in that** the second tape (4), which is wound in the second winding step, is secured to a layer (5) of fleece impregnated with the same type of resin as the resin of the first tape and of the second tape (4), said fleece having an area density of between 100 and 450 g/m².

6. Method according to Claim 5, **characterized in that** the layer (5) of fleece impregnated with resin is secured to the second tape (4) by means of heating and compression before the second winding step.

7. Method according to any one of Claims 1 to 6, **characterized in that** the first tape (3) and the second tape (4) are separate entities that are coiled separately before the winding steps.

8. Method according to any one of Claims 1 to 6, **characterized in that** the first tape (3) and the second tape (4) are secured end-to-end and/or with partial overlap so as to form a single continuous tape that is coiled as a single entity before the winding steps.

9. Method according to Claim 8, **characterized in that** the first tape (3) and second tape (4) are secured together by way of at least one of the following: heating, infrared radiation, compression.

10. Method according to any one of Claims 1 to 9, **characterized in that**, after the second winding step, the method comprises a step of adhesively bonding the two tapes (3, 4) that have been coiled one on top of the other by way of at least one of the following: heating, infrared radiation, compression.

11. Method according to any one of Claims 1 to 10, **characterized in that** the first and second winding steps are carried out on a fluidtight liner (2) composed of at least one of the following: polymer, metal.

12. Composite vessel obtained by means of the method according to any one of the preceding claims, **characterized in that** the wall thereof comprises a thickness of between 0.5 mm and 85 mm, formed by the winding of the first tape (3), and a thickness of between 0.1 and 20 mm, formed by the winding of the second tape (4) .
